Europäisches Patentamt

**European Patent Office**

**Office européen des brevets**

(11) Veröffentlichungsnummer: **0 109 489**

**B1**

(12) **EUROPÄISCHE PATENTSCHRIFT**

(45) Veröffentlichungstag der Patentschrift:
**15.10.86**

(21) Anmeldenummer: **83108409.0**

(22) Anmeldetag: **26.08.83**

(51) Int. Cl.⁴: **C 08 J 9/14,** C 08 J 5/04,
C 08 L 61/06

(54) **Verfahren zur Herstellung von glasfaserverstärktem Phenolharzschaum.**

(30) Priorität: **14.10.82 JP 180770/82**

(43) Veröffentlichungstag der Anmeldung:
**30.05.84 Patentblatt 84/22**

(45) Bekanntmachung des Hinweises auf die Patenterteilung:
**15.10.86 Patentblatt 86/42**

(84) Benannte Vertragsstaaten:
**CH DE FR GB IT LI NL SE**

(56) Entgegenhaltungen:
**DE-A-2 132 284**
**FR-A-1 567 461**
**FR-A-2 038 953**
**GB-A-882 296**

(73) Patentinhaber: **Firma Carl Freudenberg, Höhnerweg 4, D-6940 Weinheim/Bergstrasse (DE)**

(72) Erfinder: **Shinjo, Ietsugu, 848, Hie, Chuzu- cho, Yasu- gun Shiga- ken (JP)**

(74) Vertreter: **Weissenfeld- Richters, Helga, Dr., Höhnerweg 2, D-6940 Weinheim/Bergstrasse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren zur Herstellung von insbesondere leichtgewichtigem glasfaserverstärktem Phenolharzschaum, bei dem ein Glasfaservlies mit einer schäumbaren Phenolharzlösung getränkt und das Phenolharz dann durch Zufuhr von Wärme unter Einbettung der Glasfasern aufgeschäumt wird, wobei das Lösungsmittel verdampft.

Glasfaserverstärkte Phenolharzschäume dieser Art sind bekannt. Sie werden auf vielen Gebieten eingesetzt und zeichnen sich durch gute Isoliereigenschaften gegenüber Kälte- und Wärmeeinwirkung, durch hohe Chemikalienbeständigkeit und Dimensionsstabilität aus. Besonders vorteilhaft ist das leichte Gewicht und die schlechte Brennbarkeit, was Phenolharzschäume zu einem interessanten Werkstoff im Baubereich macht. Wegen der guten thermischen und toxischen Eigenschaften gegenüber z.B. Polyurethanund Polystyrolschaum finden sich auch weitere zahlreiche Anwendungsgebiete.

Phenolharzschäume weisen jedoch auch Nachteile auf und so werden insbesondere die geringe Verschleißfestigkeit und die niedrige Biegesteifigkeit beanstandet. Phenolharzschäume sind überdies brüchig, was die Anwendungsmöglichkeiten erheblich einschränkt.

Zur Beseitigung dieser Nachteile sind zahlreiche Verfahren zur Verstärkung von Phenolharzschäumen bekannt. Insbesondere sind glasfaserverstärkte Phenolharzschäume gebräuchlich. Durch die Einverleibung der Glasfasern in den Phenolharzschaum sollen Biegesteifigkeit und Verschleißfestigkeit erhöht werden. Zu diesem Zweck ist es notwendig, daß die Glasfasern möglichst gleichmäßig in dem Phenolharzschaum verteilt sind und von diesem auch einwandfrei und ohne Fehlstellen eingebettet werden.

Es besteht die Gefahr, daß die zugesetzten Glasfasern in der schäumbaren Phenolharzlösung ungleichmäßig verteilt werden.

Sie neigen überdies dazu, in der Lösung zu Boden zu sinken, wobei örtliche Verdichtungen an Glasfasern entstehen, die dann von dem Phenolharz nur unvollständig benetzt werden. Das Phenolharz schäumt oft nicht gleichmäßig auf und es wird ein unbrauchbares Produkt erhalten.

Bei Verwendung kürzerer Glasfasern erhält man zwar eine gleichmäßigere Mischung, jedoch vermindert sich die Biegesteifigkeit des Produktes verglichen an einem solchen mit längeren Glasfasern.

Es ist auch schon versucht worden, eine voluminöse Fasermatte mit einer schäumbaren Phenolharzlösung zu tränken und die Phenolharzlösung dann aufzuschäumen. Zu diesem Zwecke wurde die Fasermatte zusammengedrückt, mit der Phenolharzlösung getränkt und die Lösung dann unter Druck aufgeschäumt, nachdem sie ausreichend in die Matte eingedrungen war. Das Verfahren führt nicht zu einwandfreien Produkten, denn die imprägnierte Fasermatte erlangt nach dem Zusammenpressen nicht mehr ihre ursprüngliche Dicke, wenn das Harz aufgeschäumt ist und man erhält so einen relativ schweren Schaum, dessen Faserverstärkung auch häufig nicht einwandfrei durch das Phenolharz eingebettet wird. Insbesondere ein leichtgewichtiger Phenolharzschaum ist auf diese Weise nicht zu erhalten.

Mit Phenolharzschaum gebundene Glasfasern sind auch bereits in GB-A-882 296 beschrieben. Eine kompakte Fasermatte wird hierbei mit schaumförmigem Bindemittel versehen, welches nach dem Erhärten die Mineralfasern verfestigt. Das Bindemittel wird in Schaumform aufgetragen, weil es so die kompakte Fasermatte besser durchdringt. Bei Mineralfasern mit textilen Eigenschaften können diese auch vor der Schaumverfestigung mit einem zusätzlichen Bindemittel versehen sein. Derartige imprägnierte Fasermatten sind zwar durch das schaumförmige Bindemittel gleichmäßig imprägniert, jedoch bleibt die Schaumstruktur im fertigen Produkt nicht erhalten und insbesondere leichtgewichtige Gegenstände lassen sich auf diese Weise nicht herstellen. Dies ist auch nicht durch Binden naßgelegter Vliese nach der Papiermachertechnik mit schaumförmigem Material möglich, wenn z. B. nach FR-A-1 567 461 gefertigt wird. Auch hier wird ein kompaktes Produkt erhalten, das papierähnliche Eigenschaften aufweist.

Der Erfindung liegt nun die Aufgabe zugrunde, einen insbesondere leichtgewichtigen faserverstärkten Phenolharzschum herzustellen, der die Verstärkungsfssern in gleichmäßiger Form verteilt enthält.

Die Verstärkungsfasern müssen dabei völlig und ohne Fehlstellen in den Phenolharzschaum eingebettet sein. Als Verstärkungsfasern sind im wesentlichen Glasfasern vorgesehen.

Die erfindungsgemäß gestellte Aufgabe wird durch das in den Patentansprüchen wiedergegebene Verfahren gelöst.

Das Verfahren ist eine Weiterentwicklung der bekannten Methode, nach der ein Glasfaservlies mit einer schäumbaren Phenolharzlösung getränkt wird und das Phenolharz dann unter Zufuhr von Wärme unter Einbettung der Glasfasern aufgeschäumt wird, wobei das Lösungsmittel verdampft.

Die erfindungsgemäße Aufgabe wird bei einer solchen Methode dadurch gelöst, daß die Verstärkungsfasern mit einem solchen Bindemittel oder Bindemittelgemisch verfestigt sind, das sich in dem Lösungsmittel für das Phenolharz löst bzw. in dessen Gegenwart aufquillt. Ein Vlies aus Glasfasern als Verstärkungsfasern, dem gegebenenfalls weitere Verstärkungsfasern wie textile Synthesefasern, Asbestfasern, Keramikfasern und/oder Kohlefasern zugemischt sind, wird mit einem Bindemittel oder Bindemittelgemisch der vorstehend definierten Art verfestigt. Geeignete Bindemittel bzw. Bindemittelgemische lassen sich durch einfache geeignete Vorversuche ermitteln, in Anpassung an das gewählte Lösungsmittel für das Phenolharz. In der Regel werden Bindemittel auf der Basis von Polyvinylalkohol, Methylcellulose, Carboxymethylcellulose, Copolymeren aus Itakonsäure und Vinylacetat oder Copolymere aus Acrylsäureester und Acrylsäure bevorzugt.

Diese Bindemittel sind in wäßrigen oder alkoholischen Lösungen löslich bzw. quellbar. Derartige Lösungen werden bevorzugt im Zusammenhang mit Phenolharzen des Resoltyps, aus denen sich gut geeignete schäumbare Harzlösungen herstellen lassen.

Grundsätzlich lassen sich jedoch alle Bindemittel oder Bindemittelgemische verwenden, die sich in dem Lösungsmittel für das Phenolharz lösen bzw. darin quellen, wenn die Phenolharzlösung mit dem Glasfaservlies in Berührung gebracht wird.

Das Glasfaservlies, dem gegebenenfalls die genannten weiteren Verstärkungsfasern beigemischt sind, kann auf nassem oder trockenem Wege hergestellt sein. In der Regel wird ein naßgelegtes Vlies bevorzugt, d.h. ein Vlies, das nach Art der Papiermachertechnik hergestellt ist.

Die Glas- bzw. sonstigen Verstärkungsfasern sollen erfindungsgemäß wenigstens 2 mm lang sein und einen Durchmesser von wenigstens 3 µm haben. Bevorzugt werden Fasern mit über 10 mm Länge und einem Durchmesser von wenigstens 9 µm. Ein naßgelegtes Vlies wird deshalb bevorzugt, weil es in der Regel wegen der größeren Unregelmäßigkeit der Faserablage bessere mechanische Eigenschaften bei dem hiermit verstärkten Phenolharzschaum bewirkt.

Das Gewicht des Glasfaservlieses soll wenigstens 50 g/m$^2$ betragen. Bevorzugt werden Vliese von wenigstens 100 g/m$^2$.

Das Bindemittel bzw. Bindemittelgemisch wird in Mengen von 2 bis 10 Gew.-Prozent, bezogen auf das Gewicht der Fasern, zugesetzt. Bevorzugt werden Mengen von 3 bis 6 Gew.-Prozent.

Die schäumbare Phenolharzlösung wird dadurch erhalten, daß ein Phenolharz vom Resoltyp mit einem üblichen Härtungs- und Schäummittel vermischt wird. Die Mengenanteile können dem Verwendungszweck angepaßt gewählt werden. Die schäumbare Phenolharzmischung in einem geeigneten Lösungsmittel, in der Regel auf wäßriger oder alkoholischer Basis, wird dann mit dem Glasfaservlies zusammengebracht. Sie durchdringt und imprägniert das Glasfaservlies. Wenn das so getränkte und imprägnierte Glasfaservlies dann erhitzt wird, löst das Bindemittel bzw. Bindemittelgemisch des Vlieses sich in dem Phenolharz-Lösungsmittel bzw. es quillt durch dessen Einwirkung auf. Mit dem Aufschäumen der Phenolharzlösung unter gleichzeitigem in-Lösung-gehen bzw. Aufquellen des Bindemittels verteilen sich die Glasfasern sehr gleichmäßig in Schichten innerhalb des schäumenden Harzes. Durch die Wärmezufuhr wird gleichzeitig das Aufschäumen und das Härten des Schaumes beschleunigt und man erhält einen insbesondere leichtgewichtigen Schaum, der die Verstärkungsfasern in bisher nicht erreichter Gleichmäßigkeit einverleibt enthält.

Bei dem erfindungsgemäßen Verfahren ist es sichergestellt, daß die Phenolharzlösung das Glasfaservlies allseitig durchdringt.

Bei der Herstellung von dünnen Schichten glasfaserverstärkter leichter Phenolharzschäume ist es zweckmäßig, die Glasfaser-Vliesmatte einseitig mit einem geeigneten Papier oder einer Polyethylenfolie zu kaschieren. Dies soll verhindern, daß die Phenolharzlösung, welche das Glasfaservlies sehr leicht durchdringt, an der Rückseite herausläuft. Beim Aufschäumen erhält man auch hier sehr gleichmäßig faserdurchsetzte verstärkte Phenolharzschäume.

Die nachfolgenden Beispiele erläutern das erfindungsgemäße Verfahren.

**Beispiel 1**

Es wird ein Glasfaservlies von 300 g/m$^2$ und einer Dicke von 0,5 mm hergestellt durch Dispergieren von 94 Gewichtsteilen Glasfasern mit 10 µm Durchmesser und 13 mm Länge sowie 6 Gewichtsteilen fibrillierte Polyvinylalkoholfasern in Wasser. Aus dieser Suspension wird nach der Papiermachertechnik ein Vlies abgelegt, das getrocknet und durch Wärmeeinwirkung verfestigt wird.

Es wird weiterhin eine schäumbare Phenolharzlösung durch Mischen von 100 Gewichtsteilen eines Phenolharzes mit 80 Gew.-Prozent Festbestandteilen (Handelsname Plyophen TD 2520 der Firma Dainippon Ink & Chemicals, Inc.) und 10 Gewichtsteilen eines Härtungsmittels (Handelsname Catalyst F-20 der Dainippon Ink & Chemicals, Inc.) und 5 Gewichtsteilen Trichlorfluormethan sowie 5 Gewichtsteilen Tetrachlordifluorethan hergestellt.

Diese Mischung wird auf das vorstehend angegebene Glasfaservlies in einer Menge von 1200 g/m$^2$ bezogen auf das Festgewicht,aufgetragen. Das so behandelte Vlies wird auf 140°C erhitzt. Dabei schäumt die Phenolharzlösung auf und erhärtet.

Der erhaltene Phenolharzschaum hat eine Dichte von 0,05 g/cm$^3$. Die Glasfasern sind sehr gleichmäßig über den gesamten Querschnitt des Formkörpers in Schichten verteilt.

Der Schaum weist eine gegenüber herkömmlichen glasfaserverstärkten Phenolharzschäumen verdoppelte Biegesteifigkeit auf.

**Beispiel 2**

Es wird ein Phenolharzschaum von 30 mm Dicke mit Glasfaserverstärkung hergestellt, indem ein Blatt Packpapier einseitig mit einem Glasfaservlies gemäß Beispiel 1 durch Klebstoff verbunden wird. Die schäumbare Phenolharzlösung aus Beispiel 1 wird auf das Glasfaservlies in einer Menge von 1200 g/m², bezogen auf das Festgewicht, aufgesprüht und zwar in gleicher Weise wie in dem vorstehenden Beispiel. Das so behandelte Vlies wird auf 140° C erhitzt, wobei das Phenolharz aufschäumt und erhärtet.

Das geschäumte Harz hat eine Dichte von 0,05 g/cm³ und enthält Glasfasern, welche in einer gleichmäßigen Schicht verteilt sind. In der Nähe des Packpapiers sind die Fasern etwas dichter verteilt.

Der Phenolharzschaum weist eine ausgezeichnete Biegesteifigkeit und Verschleißfestigkeit auf.

Alle erfindungsgemäß hergestellten Phenolharzschaum-Gegenstände haben gute thermische Isoliereigenschaften und sind stets sehr biegesteif. Sie haben eine stets gleichmäßige Qualität.

**Patentansprüche**

1. Verfahren zur Herstellung von insbesondere leichtgewichtigem glasfaserverstärktem Phenolharzschaum, bei dem ein bindemittelverfestigtes Glasfaservlies mit einer schäumbaren Phenolharzlösung getränkt und das Phenolharz dann durch Zufuhr von Wärme unter Einbettung der Glasfasern aufgeschäumt wird, wobei das Lösungsmittel verdampft, dadurch gekennzeichnet, daß das Vlies aus Glasfasern und gegebenenfalls weiteren Verstärkungsfasern mit einem solchen Bindemittel oder Bindemittelgemisch verfestigt wird, das sich in dem Lösungsmittel für das Phenolharz löst bzw. darin aufquillt.

2. Verfahren zur Herstellung eines glasfaserverstärkten Phenolharzschaumes nach Anspruch 1, dadurch gekennzeichnet, daß als weitere Verstärkungsfasern textile Synthesefasern, Asbestfasern, Keramikfasern und/oder Kohlefasern verwendet werden, die den Glasfasern beigemischt werden.

3. Verfahren zur Herstellung eines glasfaserverstärkten Phenolharzschaumes nach einem der Ansprüche 1 oder 2, dadurch gekennzeichnet, daß solche Glas- und weitere Verstärkungsfasern verwendet werden, die wenigstens 2 mm lang sind und einen Durchmesser von wenigstens 3 μ haben.

4. Verfahren zur Herstellung von glasfaserverstärktem Phenolharzschaum nach einem der Ansprüche 1 bis 3, dadurch gekennzeichnet, daß solche Glas- und weitere Verstärkungsfasern verwendet werden, welche wenigstens 10 mm lang sind und einen Durchmesser von wenigstens 9 mm haben.

5. Verfahren zur Herstellung eines glasfaserverstärkten Phenolharzschaumes nach einem der Ansprüche 1 bis 4, dadurch gekennzeichnet, daß das Bindemittel oder Bindemittelgemisch in einer Menge von 2 bis 10 Gew.-Prozent, bezogen auf das Gewicht der Fasern, dem Glasfaservlies in Form von Bindefasern oder als Pulver beigemischt und das Vlies dann verfestigt wird.

6. Verfahren zur Herstellung eines glasfaserverstärkten Phenolharzschaumes nach einem der Ansprüche 1 bis 5, dadurch gekennzeichnet, daß ein naßgelegtes Glasfaservlies verwendet wird.

7. Verfahren zur Herstellung eines glaafaserverstärkten Phenolharzschaumes nach einem der Ansprüche 1 bis 6, dadurch gekennzeichnet, daß ein Glasfaservlies verwendet wird, dessen Gewicht wenigstens 50 g/m² beträgt.

8. Verfahren zur Herstellung eines glasfaserverstärkten Phenolharzschaumes nach einem der Ansprüche 1 bis 7, dadurch gekennzeichnet, daß ein Glasfaservlies verwendet wird, dessen Gewicht wenigstens 100 g/m² beträgt.

**Claims**

1. A process for the manufacture of a glass fibre-reinforced phenolic resin foam, especially of lightweight glass fibre-reinforced pherolic resin foam, in which a glass fibre fleece consolidated with binder is impregnated with a foamable phenolic resin solution and the phenolic resin is then foamed, accompanied by embedding of the glass fibres, by application of heat, during which the solvent evaporates, characterised in that the fleece, which consists of glass fibres with or without further reinforcing fibres, is consolidated with a binder or binder mixture which dissolves or swells in the solvent for the phenolic resin.

2. A process for the manufacture of a glass fibre-reinforced phenolic resin foam according to claim 1, characterised in that further reinforcing fibres are used which are selected from textile synthetic fibres, asbestos fibres, ceramic fibres and carbon fibres and are admixed with the glass fibres.

3. A process for the manufacture of a glass fibre-reinforced phenolic resin foam according to claim 1 or 2, characterised in that the glass fibres and further reinforcing fibres used are at least 2 mm long and have a diameter of at least 3 μ.

4. A process for the manufacture of a glass fibre-reinforced phenolic resin foam according to any one of claims 1 to 3, characterised in that the glass fibres and further reinforcing fibres used are at least 10 mm long and have a diameter of at least 9 mm.

5. A process for the manufacture of a glass fibre-reinforced phenolic resin foam according to any one of claims 1 to 4, characterised in that the binder or binder mixture is admixed with the glass fibre fleece in an amount of 2 to 10% by weight, based on the weight of the fibres, and in the form of bonding fibres or as a powder, the fleece thereafter being consolidated.

6. A process for the manufacture of a glass fibre-reinforced phenolic resin foam according to any one of claims 1 to 5, characterised in that a wet-laid glass fibre fleece is used.

7. A process for the manufacture of a glass fibre-reinforced phenolic resin foam according to any one of claims 1 to 6, characterised in that the glass fibre fleece used weighs at least 50 g/m$^2$.

8. A process for the manufacture of a glass fibre-reinforced phenolic resin foam according to any one of claims 1 to 7, characterised in that the glass fibre fleece used weighs at least 100 g/m$^2$.

## Revendications

1. Procédé de fabrication d'une mousse de résine phénolique renforcée de fibres de verre et particulièrement légère, procédé dans lequel on imprègne un voile de fibres de verre renforcé d'un agent liant avec une solution de résine phénolique transformable en mousse puis, par apport de chaleur, on transforme la résine phénolique en mousse en y enrobant les fibres de verre, provoquant ainsi l'évaporation du solvant, caractérisé en ce que le voile de fibres de verre et éventuellement d'autres fibres de renforcement est consolidé avec un agent liant ou un mélange d'agents liants qui se dissout dans le solvant prévu pour la résine phénolique ou qui y gonfle.

2. Procédé de fabrication d'une mousse de résine phénolique renforcée de fibres de verre selon la revendication 1, caractérisé en ce que, comme autres fibres de renforcement, on utilise des fibres synthétiques textiles, des fibres d'amiante, des fibres de matières céramiques et/ou des fibres de charbon que l'on ajoute aux fibres de verre.

3. Procédé de fabrication d'une mousse de resine phénolique renforcée de fibres de verre selon une des revendications 1 ou 2, caractérisé en ce qu'on utilise des fibres de verre et d'autres fibres de renforcement ayant une longueur d'au moins 2 mm et un diamètre d'au moins 3 μm.

4. Procédé de fabrication d'une mousse de résine phénolique renforcée de fibres de verre selon une des revendications 1 à 3, caractérisé en ce qu'on utilise des fibres de verre et d'autres fibres de renforcement ayant une longueur d'au moins 10 mm et un diamètre d'au moins 8 μm.

5. Procédé de fabrication d'une mousse de résine phénolique renforcée de fibres de verre selon une des revendications 1 à 4, caractérisé en ce qu'on ajoute l'agent liant ou le mélange d'agents liants en une quantité de 2 à 10% en poids, calculé sur le poids des fibres, au voile de fibres de verre sous forme de fibres de liaison ou sous forme d'une poudre, puis on consolide le voile.

6. Procédé de fabrication d'une mousse de résine phénolique renforcée de fibres de verre selon une des revendications 1 à 5, caractérisé en ce qu'on utilise un voile de fibres de verre posé par voie humide.

7. Procédé de fabrication d'une mousse de résine phénolique renforcée de fibres de verre selon une des revendications 1 à 6, caractérisé en ce qu'on utilise un voile de fibres de verre dont le poids atteint au moins 50 g/m$^2$.

8. Procédé de fabrication d'une mousse de résine phénolique renforcée de fibres de verre selon une des revendications 1 à 7, caractérisé en ce qu'on utilise un voile de fibres de verre dont le poids atteint au moins 100 g/m$^2$.